Europäisches Patentamt

European Patent Office

Office européen des brevets

(11) Publication number: **0 253 496**
**B1**

(12) **EUROPEAN PATENT SPECIFICATION**

(45) Date of publication of patent specification: **06.02.91**

(51) Int. Cl.⁵: **F 16 B 41/00** // B60B3/16

(21) Application number: **87305167.6**

(22) Date of filing: **11.06.87**

(54) Security wheel nut or bolt.

(30) Priority: **13.06.86 GB 8614402**

(43) Date of publication of application:
**20.01.88 Bulletin 88/03**

(45) Publication of the grant of the patent:
**06.02.91 Bulletin 91/06**

(84) Designated Contracting States:
**DE FR GB IT**

(56) References cited:
**EP-A-0 087 721**
**DD-A- 210 728**
**DE-A-1 919 340**
**FR-A- 934 482**
**US-A-1 447 564**
**US-A-4 502 825**

(73) Proprietor: **Ellis, Alan Elgar Herbert**
**14 Scott Drive Lexden**
**Colchester Essex CO3 5LE (GB)**

(72) Inventor: **Ellis, Alan Elgar Herbert**
**14 Scott Drive Lexden**
**Colchester Essex CO3 5LE (GB)**

(74) Representative: **Gillam, Francis Cyril et al**
**SANDERSON & CO. European Patent Attorneys**
**34, East Stockwell Street**
**Colchester Essex CO1 1ST (GB)**

Courier Press, Leamington Spa, England.

## Description

This invention relates to a security fastening assembly for use on a vehicle, which fastening has a rotatable member such as a nut or bolt head and which fastening is arranged so that it is very difficult to turn the rotatable member other than by the means of an appropriate and individual key.

Not infrequently, it is desired to make a nut or bolt head secure against unauthorised operation, so that the fastening cannot be turned other than by a person in possession of a key individual to that fastening. For example, in the case of the road wheels of a motor vehicle, these are usually secured in position on a hub by means of nuts threaded on to studs projecting from the hub or by bolts screwed into threaded bores provided in the hub. It is known to prevent the unauthorised removal of the wheel by providing at least one security nut or bolt which is configured to resist unscrewing other than by using a special, individual key for that nut or bolt. One common arrangement has the nut or bolt head shaped so as to have a particular non-hexagonal profile which is drivingly engageable solely by means of a complimentarily-formed key. For example, the nut or bolt head may essentially be cylindrical or conical, but provided with a plurality of spaced rexcesses extending axially from the end face parallel to the axis and into which pins projecting from a key may engage. However, such nut or bolt heads are relatively easy to release using conventional tools such as universal grips, wrenches and so on, especially if suitable pegs are first pushed into the recesses: these devices thus offer relatively low security.

In an attempt to improve the security of the wheel nuts or bolts as described above, it is known to provide a rotatable shroud around the nut or bolt head, to surround the portion of the nut or bolt head which is turned by the key, so greatly restricting access to the nut or bolt head. It is further known to provide radial projections on the specially-shaped nut or bolt head at certain pre-determined angular spacings, and to provide appropriately positioned recesses in the driving key for receiving those projections, so as to increase the number of key-combinations available for a given special design of nut or bolt head. Such arrangements are described for instance in US-A-1447564 and GB-A-1271223. It is however still found that the number of combinations available is too limited for high security, given a particular thread (and hence nut or bolt head) size. Moreover, the manufacturing processes needed for such designs of security nuts or bolt heads are complex and require considerable accuracy to ensure proper coding of the projections, so leading to significant costs.

It is a general aim of the present invention to provide an improved form of security fastening assembly particularly suitable for use in securing a vehicle road wheel against all but the most determined attempts at unauthorised removal, which improved security assembly at least reduces the disadvantages mentioned above for the known assemblies. More specifically, the invention consists of an improvement in the kind of security fastening assembly comprising a nut or bolt and a key, which nut or bolt comprises a rotatable member having a screw threaded portion interengagable with a correspondingly-threaded portion and having a drive portion which drive portion is accessible axially from the end of the rotatable member which when in use is remote from said correspondingly-threaded portion, the drive portion having a non-circular cross-sectional shape, a sleeve rotatably mounted on the rotatable member at a location remote from said one end of the rotatable member and surrounding with clearance substantially the whole axial extent of the drive portion, the sleeve having at least one inwardly directed projection, and the key having an axially extending socket which has a complementary shape to that of the drive portion, the external shape of the key in the region of the socket being circular but having at least one recess to receive said at least one projection of the sleeve whereby the key is adapted to fit within said clearance defined between the sleeve and the drive portion when the socket is engaged with the drive portion.

Though not specifically intended for use in connection with the attachment of vehicle road wheels, a fastening generally of the above kind is described in U.S Patent Specification No. 4502825; this fastening is intended for use with electric appliances, to allow the tightening thereof to a predefined torque, and then to give visible evidence of the subsequent loosening of the fastening.

Accordingly, this invention provides a security fastening of the kind described, which is characterised by the drive portion having a septagonal cross-sectional shape adapted to receive torque applied thereto by the key the socket of which is correspondingly-formed, and by the sleeve being provided with at least three inwardly-directed arcuately-spaced projections, the external surface of the key having a like number of correspondingly-spaced recesses in which said projections on the sleeve are received as the key is engaged with the rotatable member, the relative angular dispositions of the projections and corresponding recesses being coded in accordance with a predetermined schedule whereby the key is exclusively usable with a corresponding rotatable member.

The security fastening of this invention is particularly intended for use in connection with the retention of a vehicle road wheel to a hub of the vehicle. In this arrangement, the rotatable member, as a whole, comprises the wheel nut or wheel bolt; the sleeve should be rotatably mounted on the nut or bolt immediately adjacent that part which engages the wheel, when in use, so permitting axial access to the drive portion by the key.

In the present invention, such coding of a key as may be required so as to render the key individual for a particular rotatable member is performed as between the key and the rotatable sleeve, by providing inwardly directed projections on the sleeve which projections must be received in correspondingly-formed recesses in the external surface of the key, as the key is engaged with the rotatable member. The axial position of such projections within the sleeve advantageously is such that, other than when the projections are being received within the corresponding recesses in the external surface of the key, no significant engagement of the socket within the key may be achieved with the drive portion. In this way, no turning force may be imparted to the rotatable member in the event that the key does not have appropriately-positioned recesses to receive the projections within the sleeve. Most preferably, however, in order to assist an interengagement of the key with both the sleeve and the drive member, the axial position of the projections is such that the projections must be partially received within the appropriately-positioned recesses in the key prior to any interengagement taking place as between the socket in the key and the drive portion of the rotatable member.

By way of example only, two specific embodiments of security drive assembly according to this invention will now be described in detail, reference being made to the accompanying drawings which show a vehicle road wheel security nut and a vehicle road wheel security bolt, both arranged in accordance with this invention.

In the drawings:

Figure 1 is a side view, partly in section, showing the embodiment of wheel nut of this invention;

Figure 2 is a plan view on the wheel nut of Figure 1;

Figure 3 is an exploded view of the assembly of Figure 1, but also showing the associated key;

Figure 4 shows a clip for mounting the key on a vehicle wheel brace;

Figures 5 and 6 respectively show a side view, partly in section, and a plan view of the embodiment of wheel bolt of this invention; and

Figures 7 and 8 are an end view and a side view of a modified form of key for use with the nut or bolt.

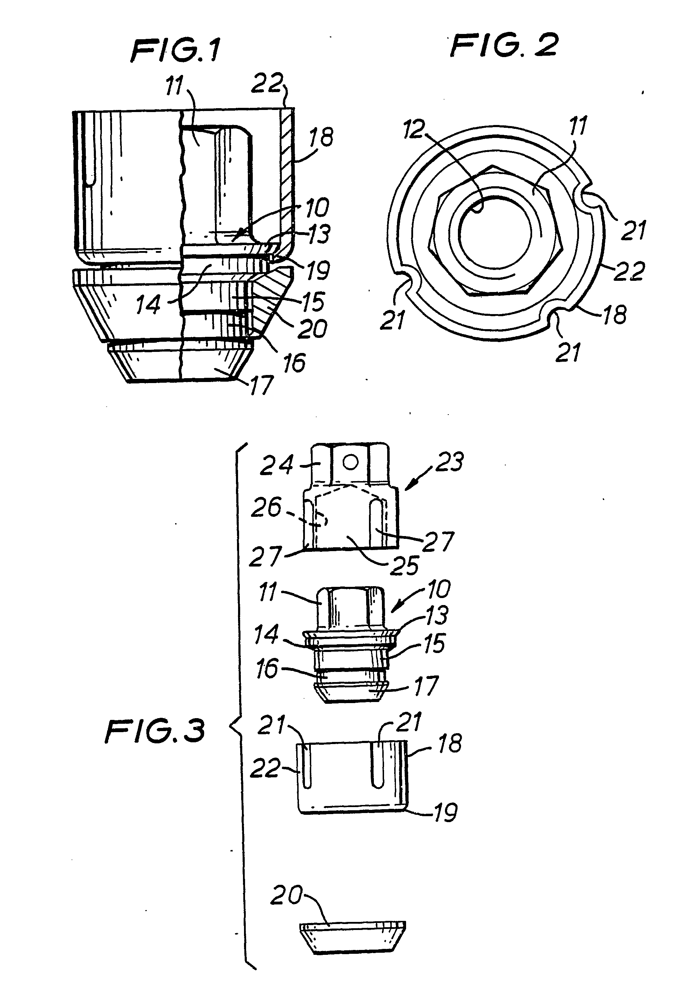

Referring initially to Figures 1 to 3, it can be seen that the vehicle wheel nut according to this invention comprises a main body 10 including a septagonal drive portion 11 and a threaded bore 12 adapted to interengage with a threaded stud projecting from a vehicle wheel hub (not shown). The drive portion 11 adjoins a flange 13, itself adjoining a cylindrical portion 14. Adjacent the cylindrical portion 14 are two further cylindrical portions 15 and 16, each of a lesser diameter than the preceding portion, the main body 10 having at its end opposed to the drive portion 11 a conical portion 17, adapted for interengagement with a conical recess in a wheel, around the stud-hole therein.

Rotatably mounted on the main body 10 is a sleeve 18, generally of cylindrical shape but having an inturned lip 19 defining a circular opening adapted to be a free running fit on the cylindrical portion 14, the flange 13 serving to locate the sleeve 18 to surround with clearance the drive portion 11. The sleeve 18 is retained in position by means of a conical washer 20, press-fitted on to cylindrical portions 15 and 16 of the main body 10, the conical washer 20 having an external conical face which is substantially aligned with the conical face of conical portion 17 of the main body 10, when the conical washer has been pressed fully home as illustrated in Figure 1, also for engagement with a conical recess in a wheel.

From Figure 2, it can be seen that the sleeve 18 has three inwardly directed projections 21, each of these being defined by the material of the sleeve side wall being deformed inwardly. The positions of the projections around the sleeve are coded to have predetermined spacings, and each projection extends from the end face 22 of the sleeve parallel to the sleeve axis towards the lip 19, for approximately one half of the length of the sleeve.

Figure 3 illustrates a key 23 adapted for use in connection with the wheel nut of Figures 1 and 2. This key has a hexagonal portion 24, preferably of the same size as the conventional wheel nuts of a motor vehicle to which the wheel nut of this invention is to be fitted, so that only a single spanner or wheel brace need be employed to release the road wheel. The key 23 also has a cylindrical portion 25 within which is formed an axially extending socket 26 of a complementary shape and size to the septagonal drive portion 11 of the main body 10, the diameter of the cylindrical portion 25 being essentially the same as the inner diameter of the sleeve 18. Three recesses 27 (only two of which can be seen in Figure 3) are formed in the circumferential wall of the cylindrical portion 25, the accurate spacing between the recesses 27 and their axial length corresponding to the spacing and dimensions of the projections 21 of the sleeve 18, so that the key 23 may be received within the sleeve 18, by interengaging the projections 21 with the respective recesses 27.

As will be appreciated from Figure 1, the end face 22 of the sleeve 18 projects beyond the end of the drive portion 11 of the nut main body 10, so that the projections 21 must first be engaged with the recesses 27 of the key 23, if the drive portion 11 is to be driven by the key. Then, after engaging the key 23 within the sleeve 18, the key and sleeve 18 must together be turned until the orientation of the socket 26 of the key corresponds to that of the drive portion 11; thereafter, the key may be slid axially so as fully to engage the socket 26 with the drive portion 11, whereafter further rotation of the key will turn the drive portion 11.

It will be appreciated that the drive portion 11 cannot be turned other than by a key having a socket suitable to engage and drive the drive portion 11 and also having an outer cylindrical surface 25 provided with suitably-disposed recesses 27 to accommodate the projections 21 of the sleeve 18. The accurate spacing of the three projections 21 should be coded, and so different as from one nut to another, though four nuts of one coding may be provided for one vehicle, one such nut for each wheel. In this way, a key 23 adapted for use with one particular nut will only fit those nuts as have the same coded spacings between the projections on the sleeve 18, and the same shaped drive portion.

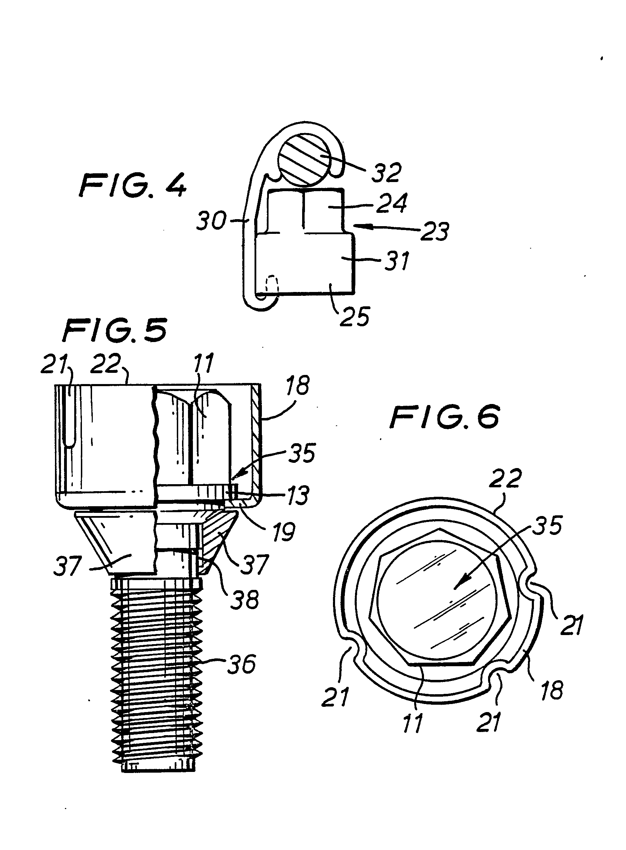

When the key illustrated in Figure 3 is not required for use, it is convenient to store it in close proximity to the wheel wrench employed to release the wheel nuts and also to turn the key itself. Figure 4 shows a spring clip 30 which may be used to hold the key 31 to the rod-like shaft 32 of a typical motor vehicle wheel brace.

Figures 5 and 6 show a security bolt for use with a vehicle having bolts to hold the wheels to the hubs. The bolt is generally similar to the nut described with reference to Figures 1 and 2; like parts are given like reference characters and will not be described again. In the bolt of Figures 5 and 6 the main body 35 has a septagonal drive portion 11, but depending from that drive portion is an externally threaded bolt 36, on which is rotatably mounted a conical washer 37, retained in a groove 38 on the bolt. In other respects the bolt corresponds to the nut of Figures 1 and 2 and is engageable by a similar key.

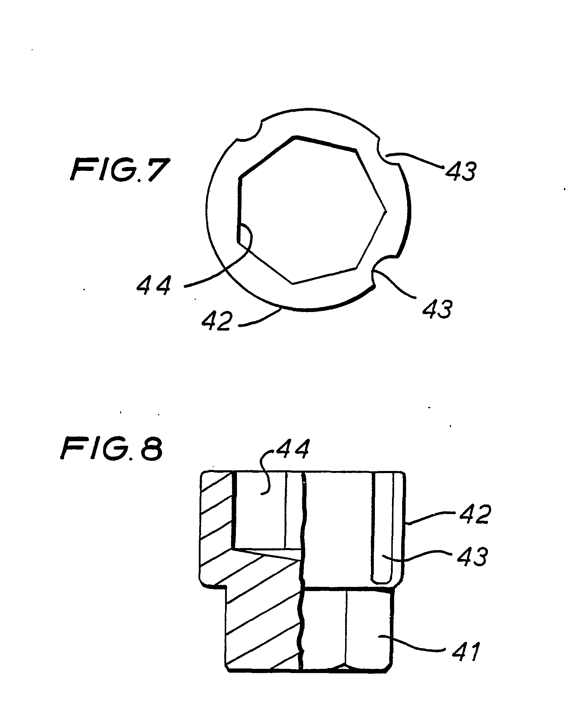

Figures 7 and 8 show a modified form of key for use with the nut or bolt described above. This key 40 has a hexagonal portion 41 contiguous with a cylindrical portion 42 in which there are formed external recesses 43 for interengagement with the projections 21 in sleeve 18, the portion 42 also having a septagonal recess 44 for engagement with the drive portion of a wheel nut or bolt. The axis of the hexagonal portion 41 is however offset from the axis of the cylindrical portion 42. This is done to ensure that should an attempt be made to defeat the security system by reducing the wall thickness of the cylindrical portion until the cylindrical portion may turn within the projections 21, by holding the hexagonal portion in the chuck of a lathe, and machining the wall of the cylindrical portion, the integrity of the cylindrical portion will be destroyed, leading to insufficient strength to permit the release of a wheel nut or bolt.

## Claims

1. A security fastening assembly comprising a nut or bolt and a key, which nut or bolt comprises a rotatable member (10) having a screw threaded portion interengagable with a correspondingly threaded portion and having a drive portion (11) which drive portion is accessible axially from the end of the rotatable member which when in use is remote from said correspondingly-threaded portion the drive portion (11) having a non-circular cross-sectional shape, a sleeve (18) rotatably mounted on the rotatable member (10) at a location remote from said one end of the rotatable member and surrounding with clearance substantially the whole axial extent of the drive portion (11), the sleeve having at least one inwardly-directed projection, and the key (23) having an axially-extending socket (26) which has a complementary shape to that of the drive portion (11), the external shape of the key (23) in the region of the socket being circular but having at least one recess to receive said at least one projection of the sleeve (18) whereby the key is adapted to fit within said clearance defined between the sleeve and the drive portion when the socket (26) is engaged with the drive portion, characterised in that the drive portion (11) has a septagonal cross-sectional shape adapted to receive torque applied thereto by the key (23) the socket (26) of which is correspondingly-formed, and in that sleeve (18) is provided with at least three inwardly-directed arcuately-spaced projections (21), the external surface (25) of the key (23) having a like number of correspondingly-spaced recesses (27) in which said projections (21) on the sleeve are received as the key is engaged with the rotatable member, the relative angular dispositions of the projections and corresponding recesses being coded in accordance with a predetermined schedule whereby the key is exclusively usable with a corresponding rotatable member.

2 A security fastening assembly according to any of the preceding claims, characterised in that the axial position of said at least three projections (21) on the sleeve (18) is such that the projections (21) must be partially received within the appropriately-positioned recesses (27) in the key (23) prior to any interengagement taking place between the socket (26) in the key (23) and the drive portion (11) of the rotatable member (10).

3. A security fastening assembly according to Claim 1 or Claim 2, characterised in that the sleeve (18) projects axially beyond the end of the drive portion (11) of the rotatable member (10).

4. A security fastening assembly according to any of the preceding claims, characterised in that the key (23) has a hexagonal drive portion (24) adjoining the cylindrical portion (25) thereof.

## Patentansprüche

1. Befestigungsanordnung aufweisend eine Mutter oder einen Bolzen und einen Schlüssel, wobei Mutter oder Bolzen ein drehbares Element (10) mit einem Schraubgewindebereich, der in Eingriff mit einem entsprechenden Gewindebereich bringbar ist, und einen Antriebsbereich (11) hat, der axial vom Ende des drehbaren Elementes zugänglich ist, das im Gebrauch von dem entsprechenden Gewindebereich entfernt liegt, wobei der Antriebsbereich (11) eine nicht-kreisförmige Querschnittsform hat, auf dem drehbaren Element (10) an einer Stelle entfernt von dem Ende drehbar eine Buchse (18) befestigt ist und mit Freiraum im wesentlichen die gesamte axiale Erstreckung des Antriebsbereichs (11) umgibt, wobei die Buchse mindestens einen nach innen gerichteten Vorsprung aufweist und der Schlüssel (23) eine sich axial erstreckende Fassung (26) hat, deren Form komplementär zu der des Antriebsbereichs (11) ist, wobei die äußere Form des Schlüssels (23) im Bereich der Fassung kreisförmig ist, jedoch mindestens eine Aussparung zur Aufnahme des mindestens einen Vorsprunges der Buchse (18) aufweist, so daß der Schlüssel geeignet ist, im zwischen Buchse und Antriebsbereich gebildeten Freiraum zu passen, wenn die Fassung (26) in Eingriff mit dem Antriebsbereich steht, dadurch gekennzeichnet, daß der Antriebsbereich (11) eine septagonale Querschnittsform geeignet zur Aufnahme eines vom Schlüssel (23), dessen Fassung (26) entsprechend geformt ist, aufgebrachten Drehmomentes hat, und daß die Buchse (18) mindestens drei nach innen gerichtete in Bogenrichtung im Abstand voneinander liegende Vorsprünge (21) hat und die Außenfläche (25) des Schlüssels (23) eine gleiche Anzahl entsprechend beabstandeter Aussparungen (27) aufweist, von denen die Vorsprünge (21) der Buchse aufgenommen werden, wenn der Schlüssel in Eingriff mit dem drehbaren Element gebracht wird, wobei die Winkelverteilungen der Vorsprünge und der entsprechenden Aussparungen gemäß einer vorgegebenen Regel kodiert sind, so daß der Schlüssel allein für ein entsprechendes drehbares Element benutzt werden kann.

2. Sicherheits-Befestigungsanordnung nach Anspruch 1, dadurch gekennzeichnet, daß die axiale Lage der mindestens drei Vorsprünge (21) ander Buchse (18) so ist, daß sie entsprechend positionierten Aussparungen (27) des Schlüssels (23) aufgenommen werden, bevor ein Eingriff zwischen der Fassung (26) des Schlüsels (23) und dem Antriebsbereich (11) des drehbaren Elementes (10) stattfindet.

3. Sicherheits-Befestigungsanordnung nach Anspruch 1 oder 2, dadurch gekennzeichnet, daß die Buchse (18) sich axial über das Ende des Antriebsbereichs (11) des drehbaren Elementes (10) erstreckt.

4. Sicherheits-Befestigungsanordnung nach einem der vorhergehenden Ansprüche, dadurch gekennzeichnet, daß der Schlüssel (23) einen hexagonalen Antriebsbereich (24) hat, der an den zylindrischen Bereich (25) anschließt.

**Revendications**

1. Un dispositif de fermeture de sécurité comprenant un écrou ou un verrou et une clef, lequel écrou ou verrou comprend un élément tournant (10) ayant une portion à vis filetée susceptible de coopérer avec une portion comportant un filetage correspondant et ayant une portion d'entraînement (11), laquelle portion d'entraînement est accessible axialement à partir de l'extrémité de l'élément tournant qui, en utilisation, est à distance de la dite portion connectant un filetage correspondant, la portion d'entraînement (11) ayant une forme non circulaire en coupe transversale, un manchon (18) monté en rotation sur l'élément tournant (10) en un point situé à distance de ladite extrémité de l'élément tournant et entourant avec un jeu sensiblement la totalité de l'étendue axiale de la portion d'entraînement (11), le manchon ayant au moins une partie en saillie dirigée vers l'intérieur, et la clef (23) ayant une alvéole (26) s'étendant axialement qui a une forme complémentaire de celle de la portion d'entraînement (11), la forme externe de la clef (23) dans la région de l'alvéole étant circulaire mais ayant au moins une cavité pour recevoir au moins une partie en saillie du manchon (18) grâce à quoi la clef est adaptée pour se placer à l'intérieur dudit jeu défini entre le manchon et la portion d'entraînement quand l'alvéole (26) est engagée avec la portion d'entraînement, caractérisée en ce que la portion d'entraînement (11) a une forme septagonale en coupe transversale adaptée pour recevoir le couple appliqué à celui-ci par la clef (23), l'alvéole (26) est formée de façon correspondante et en ce que le manchon (18) est pourvu d'au moins trois parties en saillie (21) dirigées vers l'intérieur et placées en arc, la surface externe (25) de la clef (23) ayant un nombre semblable de cavités placées de façon correspondante dans lesquelles les dites parties en saillie (21) sur le manchon sont reçues alors que la clef est engagée dans l'élément tournant, les dispositions angulaires relatives des parties en saillie et des cavités correspondantes étant codés en accord avec un déroulement prédéterminé de sorte que la clef est exclusivement utilisable avec l'élément tournant correspondant.

2. Un dispositif de fermeture de sécurité selon une quelconque des revendications précédentes, caractérisé en ce que la position axiale desdits au moins trois parties en saillie sur le manchon (18) est tel que les parties en saillie (2) doivent être partiellement reçues à l'intérieur des cavités (27) positionnées de façon appropriée dans la clef (23) avant tout autre interaction entre l'alvéole (26) dans la clef (23) et la portion d'entraînement (11) de l'élément tournant (10).

3. Un dispositif de fermeture de sécurité selon la revendication 1 ou 2, caractérisé en ce que le manchon (18) forme axialement une partie en saillie au-delà de l'extrémité de la portion d'entraînement (11) de l'élément tournant (10).

4. Un dispositif de fermeture de sécurité selon une quelconque des revendications précédentes, caractérisé en ce que la clef (23) a une portion d'entraînement (24) hexagonale contiguë à la portion cylindrique (25) de celle-ci.

FIG.1

FIG. 2

FIG.3

*FIG. 4*

*FIG. 5*

*FIG. 6*

FIG.7

44

42

43

43

FIG.8

44

42

43

41